# EUROPEAN PATENT APPLICATION

(11) **EP 4 730 164 A1**
(43) Date of publication of application: **22.04.2026**
(21) Application number: 24207034.0
(22) Date of filing: 16.10.2024
(51) Int. Cl.: G06F 18/214, G06V 20/56

(54) **A METHOD FOR GENERATING A DATA SET FOR TRAINING AND/OR TESTING A MACHINE LEARNING SYSTEM**

(71) Applicant: Robert Bosch GmbH, 70442 Stuttgart (DE); CARIAD SE, 38442 Wolfsburg (DE)
(72) Inventor: Kugele, Alexander, 70806 Kornwestheim (DE); Laube, Kevin Alexander, 72108 Rottenburg am Neckar (DE); Borges, Julio, 70176 Stuttgart (DE); Cheng, Shin-I, 70190 Stuttgart (DE)
(74) Representative: Bösherz Goebel Patentanwälte

(57) **Abstract**

The invention relates to a method (100) for generating a data set (60) for training and/or testing a machine learning system (50), comprising: providing (101) image data (40) specific to images of different environmental scenarios, providing (102) scene description data (45) specific to a description of the different environmental scenarios, wherein different scene descriptions are generated for the scene description data (45), generating (103) the data set (60) for the training and/or testing based on the provided scene description data (45).

## Description

The invention relates to a method for generating a data set for training and/or testing a machine learning system. Furthermore, the invention relates to a machine learning model, a computer program, an apparatus, and a storage medium for this purpose.

### State of the art

There is an importance to cover corner cases in model training for automatic driving, like car front view object detection, to sufficiently address safety issues. While data for corner cases is difficult to collect in the real world, synthetic data plays an important role in helping models handle rare situations and enhance robustness.

Large text-to-image generative models (T2I) like stable diffusion (see e.g. "Rombach et al. High-Resolution Image Synthesis with Latent Diffusion Models; arXiv:2112.10752", in the following referred to as [1]) have become increasingly powerful, enabling users to control image synthesis via text descriptions.

For data augmentation tasks like drive-scene synthesis that are required to generate accurate, diverse, and sometimes rare images given the corresponding text prompts, it is often crucial to have diverse and precise text descriptions for the existing images so that one can make use of a T2I model pretrained on large-scaled image data and then fine tune it on this small amount of specific text-image paired data.

As it is costly to annotate images by humans, annotations generated by VLP (Vision-Language Pre-training) like BLIP-2 (see e.g. "Li et al. BLIP-2: Bootstrapping Language-Image Pre-training with Frozen Image Encoders and Large Language Models; arXiv:2301.12597", in the following referred to as [2]) may be used. However, such captions annotated by BLIP-2 tend to only give a brief description of the image, lacking diversity and details.

### Disclosure of the invention

According to aspects of the invention a method with the features of claim 1, a machine learning model with the features of claim 11, a computer program with the features of claim 12, a data processing apparatus with the features of claim 13 as well as a computer-readable storage medium with the features of claim 14 are provided. Further features and details of the invention are disclosed in the respective dependent claims, the description and the drawings. Features and details described in the context to the method according to the invention also correspond to the machine learning model, the computer program, the data processing apparatus as well as the computer-readable storage medium, and vice versa in each case.

According to an aspect of the invention a method for generating a data set for training and/or testing a machine learning system is provided. The method can be configured as a computer-implemented method and/or fully automatized method. In other words, all method steps may be carried out automatically.

The method according to the invention may comprise providing image data specific to images of different environmental scenarios. To this end, images may be obtained from a camera and - only optionally - enhanced by synthetic images, for example by data augmentation. Alternatively, the images may also be fully synthesized. The different environmental scenarios may comprise different situations and/or scenes and/or driving scenarios and/or situations of the environment of the camera. The environmental scenarios may therefore be characterised by the presence of objects like pedestrians and/or a road and/or a lane boundary and/or lane markings and/or by additional parameters like distances and/or spatial positions and/or relative velocities of these objects.

The method according to the invention may further comprise providing scene description data specific to a description of the different environmental scenarios. The scene description data may therefore comprise a description of the presence of objects and/or the above-mentioned parameters in the environment in text/words and/or natural language.

Different scene descriptions may be generated for the scene description data, particularly in natural language. Therefore, the scene description data may comprise the different scene descriptions, for example in a text format.

The scene descriptions may be generated by using at least one Visual Question Answering (VQA) technique, particularly in connection with an image model. In other words, the provision of the scene description data may comprise applying questions about details of the environmental scenarios to an image model. The image model may be configured as a pretrained machine learning model that responses in natural language to the questions with answers and descriptions about the image data and/or the environmental scenarios shown therein.

It is possible that the at least one Visual Question Answering technique comprises using a series of prompts with questions that query various details about the environmental scenarios, particularly to obtain the details (e.g. about the content of the provided image data and/or the environmental scenarios shown therein) as an output of an/the image model.

The method according to the invention may further comprise generating the data set for the training and/or testing based on the provided scene description data. Thereby, highly detailed and informative scene descriptions for training and testing the machine learning system can be provided, particularly in the context of autonomous driving.

As described, embodiments of the invention leverage Visual Question Answering (VQA) techniques to extract specific details about environmental scenarios from the images. By using a series of prompts with targeted questions and applying them to the image model, the VQA may be able to analyse the image content and to provide detailed descriptions encompassing various aspects such as weather conditions, objects present, road type, and other relevant information. These enriched descriptions may then be integrated into a training data set, leading to improved performance in handling diverse and complex scenarios, including rare "corner cases."

It is possible that the generated data set is a training data set that comprises multiple text-image pairs, wherein the text-image pairs comprise at least two of the following:
- The provided scene description data with the generated scene descriptions,
- The provided image data that particularly corresponds to the generated scene descriptions,
- Synthetic image data generated based on the generated scene descriptions and/or the provided image data.

Furthermore, it is possible that the text-image pairs provide a representation of the different and/or of newly generated environmental scenarios for the training, particularly fine-tuning, and/or testing, of the machine learning system.

The generation of the data set based on the generated scene descriptions allows for the training and particularly fine-tuning of a machine learning system on a diverse range of environmental scenarios. The optional inclusion of synthetic image data, for example by using augmentation techniques, expands the scope of the training data, enabling the system to handle scenarios that may be rare or difficult to capture in real-world datasets.

It is possible that the method further comprises: Carrying out the training, particularly a fine-tuning, of the machine learning system by means of the generated data set for generating further training data and/or synthesized images and/or for a drive-scene synthesis. The generated data set and/or the training data may be used for a large text-to-image generative model (T2I) like stable diffusion. Furthermore, the scene descriptions may be used for building text prompts for the large text-to-image generative model. The model may be used in the context of data augmentation tasks like drive-scene synthesis that are required to generate accurate, diverse, and sometimes rare images given the corresponding text prompts.

It is possible that the method further comprises: Carrying out the training, particularly a fine-tuning, of the machine learning system by means of the generated data set for an application for an at least partially autonomous driving system and/or a driver assistance system of a vehicle. It is thereby possible to further enhance the performance for downstream applications like autonomous driving or for driver assistance systems through fine-tuning using the generated data set. This refined training process can lead to improved accuracy, responsiveness, and safety in various driving scenarios. The detailed environmental descriptions enable the machine learning system to better understand and respond to complex situations.

It is possible that the machine learning system is trained and/or tested for providing a classification of digital images based on pixels (including image points) of the digital images, wherein the digital images particularly result from a recording of an environment of a vehicle and/or a camera, preferably during a journey of the vehicle. It is another advantage that the machine learning system, after trained and/or tested using the generated dataset, can classify digital images based on pixel information. These images may originate from recordings of a vehicle's environment captured by a camera, particularly during the movement and navigation of the vehicle. This classification capability could be valuable for various applications, such as object recognition, scene understanding, and autonomous driving decision-making.

It is further possible that a controlling of the vehicle is carried out automatically and based on an object detection and/or classification performed using the trained machine learning system. This allows the vehicle to make decisions and take actions based on its understanding of surrounding objects, potentially leading to safer and more efficient driving.

It is possible that the provision of scene description data comprises:
- Acquiring responses to the questions regarding features of the provided image data from the output of the image model in the form of a pre-trained machine learning model, particularly a multimodal model,
- Combining and/or refining the responses at least by concatenating the responses and/or reducing redundancy in the responses.

Furthermore, the data set may be generated based on the refined responses. In other words, it is possible to leverage pre-trained machine learning models, particularly multimodal models, to acquire responses to questions about the image data. These responses can be refined through techniques like concatenation and redundancy reduction. This approach enhances the accuracy and richness of the scene descriptions, leading to more effective training data.

It is further possible that the image model is configured as a multimodal model and comprises an image encoder. Alternatively, or additionally, the machine learning system is configured as a text-to-image model. It is also possible that the image model utilizes a dual input architecture, processing both visual and textual, particularly natural language, information (input). The image data may serve as basis for the visual input and the scene descriptions as basis for the textual input. This multimodal design allows for a more comprehensive understanding of the image content. The integration of an image encoder enables the model to extract relevant features from the images, contributing to a better representation of the environmental scenarios.

It is possible that the provision of scene description data comprises: Enhancing existing scene descriptions using the generated scene descriptions as new (additional) descriptions. This may enhance the diversity and richness of the training data. The combination of existing and newly generated scene descriptions and the subsequent use for the VQA can create a more comprehensive understanding of the environmental scenarios for the machine learning system. This can lead to improved performance in tasks such as image synthesis, data augmentation, object recognition, scene segmentation, and/or autonomous navigation.

It is further possible that the provision of the data set comprises:
- Generating text prompts based on the provided scene description data, wherein information contained in the scene description data, particularly the scene descriptions, are used for the text prompts to specify the text prompts for an image generation,
- Generating the data set based on the generated text prompts and preferably also based on the provided image data.

The generated data set may comprise synthetic images generated on basis of the text prompts. It is therefore possible that the invention provides a method for generating more detailed scene descriptions and/or synthetic images by utilizing text prompts derived from existing scene descriptions. These text prompts, adapted to specific details within the scene description data, may be used to guide an image generation model in creating the synthetic images.

It is also possible that the training and/or testing is carried out for a technical downstream application, particularly a driving scene detection, wherein the questions are predefined to query details about the environmental scenarios related to corner cases of this downstream application. The corner cases may comprise at least one of the following: rare driving scenarios like lost cargo on a road, burning cars, or special weather conditions like a scene under foggy weather. It is therefore possible that the training dataset can be adapted to autonomous driving applications like scene detection. By using prompts focused on "corner cases" relevant to driving, the generated synthetic data can effectively address these rare situations.

Another aspect of the invention is a machine learning model resulting from training by the following steps:
- Generating a data set by a method according to the invention,
- Training the machine learning model at least using (i.e. based on or directly with) the generated data set.

The machine learning model can be part of or can be configured as a machine learning system according to the described method according to the invention.

The present invention may comprise the generation of detailed text captions for images using Visual Question Answering (VQA) and a pre-built image model such as BLIP-2. The method may comprise the definition of questions for the VQA model to obtain answers to specific features of the image data. These answers may then be reduced for redundancy and used to augment the original captions, resulting in more informative text-image pairs.

The invention may provide prompt engineering for diverse and detailed descriptions in addition to the existing BLIP-2 captioning, BLIP2-based Visual Question Answering (VQA) prompt engineering (see aforementioned [2]). With proper question design focused on the characteristics of interest, answers from BLIP-2 give descriptions that may not show up in the original captions, including weather, important objects in the scene and so on. These answers can then further be refined to reduce redundancy and noise. Additionally, the refined descriptions from this strategy can be concatenated with the original captions, leading to more informative text-image pairs. Those text-image pairs with detailed and diverse text descriptions then can be further used to train or fine-tune a machine learning system, e.g. in the form of a Large text-to-image generative model (T2I) like stable diffusion (see aforementioned [1]) and generate useful synthetic data covering more cases than real data for several vehicle downstream tasks.

Using VQA-based prompt engineering, a way is particularly provided to usefully extend an image caption and make it more informative. The advantages of the invention can be summarized as follows:
1. It can be given an insight into the visual question answering of a technique like BLIP-2, showing the ability to leverage it as a caption improvement and focus on characteristics of interest.
2. A novel prompt engineering may be provided for generating diverse and detailed text descriptions corresponding to an existing image dataset.

It is also conceivable that the training is intended to train the machine learning system using the generated data set to classify digital images on the basis of pixels of the images, preferably edges or pixel attributes. These digital images can, for example, be digital images resulting from a recording by a camera and/or of a vehicle environment during a journey of a vehicle.

The classification may be used to recognise objects in an environment depicted by the digital images and/or to understand a traffic scene. Based on the classification, in particular a result of the classification, control of the vehicle may be initiated and/or carried out. For example, braking can be initiated if the classification indicates that there are obstacles in the direction of travel. It is also possible that a lane and/or a lane boundary can be recognised on the basis of the classification in order to move the vehicle at least partially automatically.

The vehicle may be configured as a motor vehicle and/or passenger vehicle and/or at least partially autonomous vehicle. The method according to the invention may have the advantage that the generated data set may be used as training and/or test data and can be generated with a high variation - in particular when representing different environmental scenarios. This can improve the reliability of the training and/or testing and the resulting trained machine learning system for the classification task. Testing can be carried out, for example, as part of the training by splitting the generated data set into test and training data and using the test data to check the progress of the training. In particular, a high variation in the data set can improve the generalisation capability of the machine learning system.

Classification can be provided for various technical applications. One example is the application in the vehicle. Based on the classification, in particular at least one classification result, at least one control action, preferably for a vehicle or for another technical system, can be initiated and/or carried out, for example.

A classification result may comprise and/or be specific to at least one of the following results: a category of objects, an identification of objects, a position of objects and/or obstacles (e.g. in the direction of travel or next to the direction of travel), a presence of obstacles, a description of a traffic scene, a hazard message, a number of objects, a type and/or position of lane markings and/or a lane boundary, a position and/or a status of traffic signaling systems, a position of a lane, or the like.

At least one control action for the vehicle may be initiated and/or carried out on the basis of the classification result. The control action may comprise at least one of the following: braking, steering, accelerating, overtaking maneuvers, emergency braking, activation of an alarm system, activation of a hazard warning system, activation of a direction indicator, light control, or the like.

The classification can be used to recognize an obstacle, for example, regardless of whether it is directly in the direction of travel or next to it. Depending on the location (e.g. depending on the expected vehicle trajectory), a corresponding control action such as braking or swerving can be initiated.

For example, braking can also be initiated if the classification indicates that there are obstacles in the direction of travel and/or a collision is likely. It is also conceivable that a lane and/or a lane boundary are recognized on the basis of the classification in order to move the vehicle at least partially automatically on the lane by means of the control action.

The 'classification' and 'image classification' can also include 'object detection' or 'object detection in images'. In particular, this means classifying whether or not there are objects in certain areas of the image. In addition, the terms 'classification' and 'image classification' can also refer to 'semantic segmentation', in particular in the form of pixel-by-pixel classification.

In another aspect of the invention, a computer program may be provided, in particular a computer program product, comprising instructions which, when the computer program is executed by at least one computer, cause the computer to carry out the method according to the invention. Thus, the computer program according to the invention can have the same advantages as have been described in detail with reference to a method according to the invention.

In another aspect of the invention, an apparatus for data processing may be provided, which is configured to execute the method according to the invention. As the apparatus, for example, a computer can be provided which executes the computer program according to the invention. The computer may include at least one processor that can be used to execute the computer program. Also, a non-volatile data memory may be provided in which the computer program may be stored and from which the computer program may be read by the processor for being carried out.

According to another aspect of the invention a computer-readable storage medium may be provided which comprises the computer program according to the invention and/or instructions which, when executed by at least one computer, cause the computer to carry out the steps of the method according to the invention. The storage medium may be formed as a data storage device such as a hard disk and/or a non-volatile memory and/or a memory card and/or a solid-state drive. The storage medium may, for example, be integrated into the computer.

Furthermore, the method according to the invention may be implemented as a computer-implemented method. Alternatively, or additionally, at least one of the disclosed method steps may be computer-implemented and/or automated.

Further advantages, features and details of the invention will be apparent from the following description, in which embodiments of the invention are described in detail with reference to the drawings. In this context, the features mentioned in the claims and in the description may each be essential to the invention individually or in any combination. Showing:
- Fig. 1:: A method, a machine learning model, a computer program, a storage medium and an apparatus according to embodiments of the invention.
- Fig. 2:: Further details of embodiments of the invention.

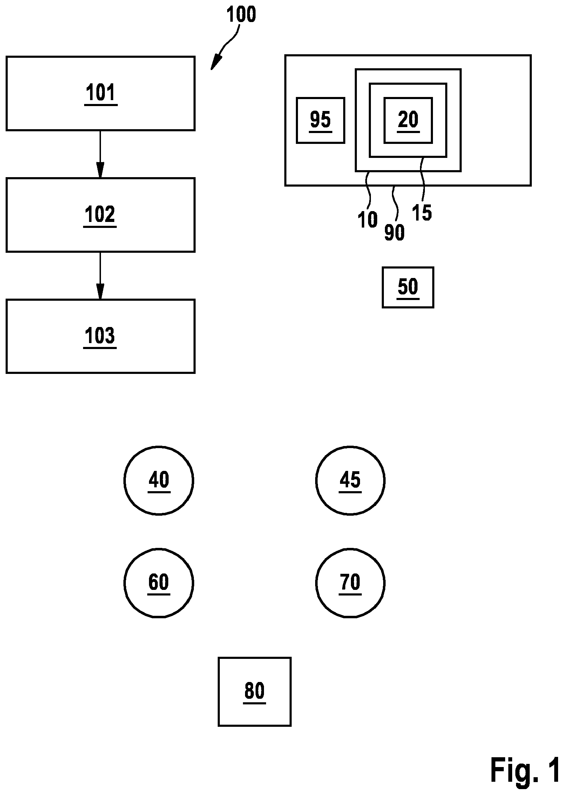

Fig. 1 shows embodiments of the invention, particularly an apparatus 10, a computer program 20, a machine learning system/model 50 and a data storage medium 15 as well as a method 100 for generating a data set 60 for training and/or testing a machine learning system 50.

The method 100 comprises providing 101 image data 40 specific to images of different environmental scenarios. The images may be configured as digital images, e.g. resulting from video, radar, LiDAR, ultrasonic, motion, or thermal imaging.

Then, according to another method step 102, scene description data 45 is provided that is specific to a description of the different environmental scenarios. Here, different scene descriptions are generated for the scene description data 45.

Then, according to another method step 103, the data set 60 for the training and/or testing is generated based on the provided scene description data 45.

The scene descriptions may be generated by using at least one Visual Question Answering technique, wherein the at least one Visual Question Answering technique comprises using a series of prompts with questions that query various details about the environmental scenarios to obtain the details about the content of the provided image data 40 as an output of an image model 80. In other words, the image model 80 may output the details in answers to the questions.

According to Fig. 1, the machine learning system 50 may be trained and/or tested for providing a classification of digital images on the basis of pixels of the digital images, wherein the digital images particularly result from a recording of an environment of a vehicle 90 and/or a camera 95, preferably during a journey of the vehicle 90.

According to Fig. 1, the provision 103 of the data set 60 may comprise: Generating text prompts 70 based on the provided scene description data 45. Information contained in the scene description data may here be used for the text prompts 70 to specify the text prompts 70 for being used in an image generation. Accordingly, the data set 60 may be generated based on the generated text prompts 70 and preferably also based on the provided image data.

Usually, when providing the image data, captions already exist to the environmental scenarios and particularly to each of the images in the image data. Several questions may then be used that have been designed related to the information that are to cover in the text prompts and the details that sometimes are missed in the original captions, including important objects in the scene, weather, roadtype and so on. These questions may be forwarded into an image model like a BLIP-2 question answering model and the answers can be collected. As sometimes the answers are duplicate or contain uninformative words about the images, these answers may further be refined by detecting and removing redundancies and unimportant descriptions.

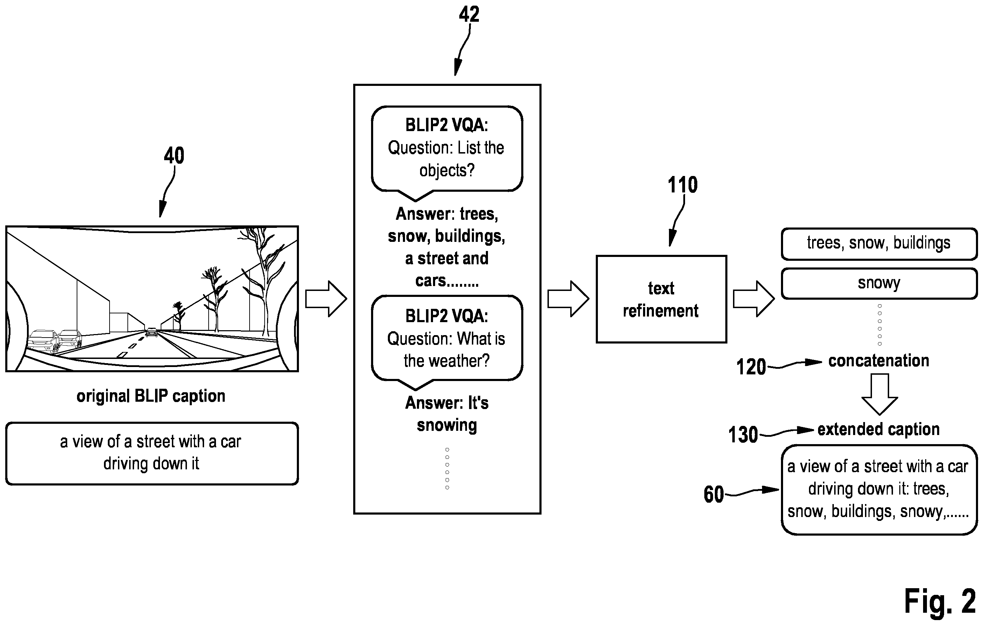

The following example according to Fig. 2 describes the visual question answering process use case with more details.

Visual question answering may have its query template like this: "Question: {} Answer: {}". For example, as shown according to reference sign 42, if it should be asked to "list the objects" then the input text query should be "Question: List the objects? Answer:". This template can be followed, and several questions be designed regarding information of interest, including "list the objects", "What is the weather", "what is the road type", "Is there any pedestrian", etc.

Redundancy may occur in the answers that are collected from these questions. For example, snow may show up in both answers from question "list the objects" and "what is the weather". Therefore, such duplication is detected and removed from the prompt. This step of refinement is shown at reference sign 110. Additionally, the prompts can be refined by using only the essential description of the desired information, transforming answers from something like "it's snowing" to "snowy" only. Finally, the refined answers can be combined 120 and used to extend the original caption 130.

Embodiments of the invention provide more diverse and detailed prompt engineering and can be utilized to enhance the quality of text-image pairs. The text-image paired data obtained from embodiments of the invention can then be further used to train or fine-tune a text-to-image model like stable diffusion, which can generate useful synthetic data for several downstream tasks. Some potential applications can be generating corner cases with lost cargo on the road, burning cars or scene under foggy weather for downstream object detection tasks.

The above explanation of the embodiments describes the present invention in the context of examples. Of course, individual features of the embodiments can be freely combined with each other, provided that this is technically reasonable, without leaving the scope of the present invention.

## Claims

1. A method (100) for generating a data set (60) for training and/or testing a machine learning system (50), comprising:
- providing (101) image data (40) specific to images of different environmental scenarios,
- providing (102) scene description data (45) specific to a description of the different environmental scenarios, wherein different scene descriptions are generated for the scene description data (45),
- generating (103) the data set (60) for the training and/or testing based on the provided scene description data (45),
**characterized in that**
the scene descriptions are generated by using at least one Visual Question Answering (VQA) technique, wherein the at least one Visual Question Answering (VQA) technique comprises using a series of prompts with questions that query various details about the environmental scenarios to obtain the details about the content of the provided image data (40) as an output of an image model (80).

2. The method (100) of claim 1, **characterized in that** the generated data set (60) is a training data set (60) that comprises multiple text-image pairs, wherein the text-image pairs comprise at least two of the following:
- The provided scene description data (45) with the generated scene descriptions,
- The provided image data (40) that corresponds to the generated scene descriptions,
- Synthetic image data generated based on the generated scene descriptions and/or the provided image data (40),
wherein the text-image pairs provide a representation of the different and/or newly generated environmental scenarios for the training, particularly fine-tuning, and/or testing, of the machine learning system (50).

3. The method (100) of any one of the preceding claims, **characterized in that** the method (100) further comprises:
- Carrying out the training, particularly a fine-tuning, of the machine learning system (50) by means of the generated data set (60) for an application for an at least partially autonomous driving system and/or a driver assistance system of a vehicle (90).

4. The method (100) of any one of the preceding claims, **characterized in that** the machine learning system (50) is trained and/or tested for providing a classification of digital images on the basis of pixels of the digital images, wherein the digital images particularly result from a recording of an environment of a vehicle (90) and/or a camera (95) , preferably during a journey of the vehicle (90).

5. The method (100) of claim 3 or 4, **characterized in that** a controlling of the vehicle (90) is carried out automatically and based on an object detection and/or classification performed using the trained machine learning system (50).

6. The method (100) of any one of the preceding claims, **characterized in that** the provision (102) of scene description data (45) comprises:
- Acquiring responses to the questions regarding features of the provided image data from the output of the image model in the form of a pre-trained machine learning model, particularly a multimodal model,
- Refining the responses at least by concatenating the responses and/or reducing redundancy in the responses,
wherein the data set (60) is generated based on the refined responses.

7. The method (100) of any one of the preceding claims, **characterized in that** the image model is configured as a multimodal model and comprises an image encoder, wherein the machine learning system (50) is configured as a text-to-image model.

8. The method (100) of any one of the preceding claims, **characterized in that** the provision (102) of scene description data (45) comprises:
- Enhancing existing scene descriptions using the generated scene descriptions as new descriptions.

9. The method (100) of any one of the preceding claims, **characterized in that** the provision (103) of the data set (60) comprises:
- Generating text prompts (70) based on the provided scene description data (45), wherein information contained in the scene description data is used for the text prompts (70) to specify the text prompts (70) for an image generation,
- Generating the data set (60) based on the generated text prompts (70) and preferably also based on the provided image data.

10. The method (100) of any one of the preceding claims, **characterized in that** the training and/or testing is carried out for a technical downstream application, particularly a driving scene detection, wherein the questions are predefined to query details about the environmental scenarios related to corner cases of this downstream application, wherein the corner cases comprise at least one of the following: lost cargo on a road, burning cars, scene under foggy weather.

11. A machine learning model (51) resulting from training by the following steps:
- Generating a data set (60) by a method (100) of any one of the preceding claims,
- Training the machine learning model (51) at least with the generated data set (60).

12. A computer program (20), comprising instructions which, when the computer program (20) is executed by at least one computer (10), cause the computer (10) to carry out the method (100) of any one of claims 1 to 9.

13. A data processing apparatus (10), comprising means for carrying out the method (100) of any one of claims 1 to 9.

14. A computer-readable storage medium (15) comprising instructions which, when executed by a computer (10), cause the computer (10) to carry out the steps of the method (100) of any one of claims 1 to 9.

## Amended claims

### Amended claims in accordance with Rule 137(2) EPC.

1. A method (100) for generating a data set (60) for training and/or testing a machine learning system (50), comprising:
- providing (101) image data (40) specific to images of different environmental scenarios,
- providing (102) scene description data (45) specific to a description of the different environmental scenarios, wherein different scene descriptions are generated for the scene description data (45),
- generating (103) the data set (60) for the training and/or testing based on the provided scene description data (45),
**characterized in that**
the scene descriptions are generated by using at least one Visual Question Answering (VQA) technique, wherein the at least one Visual Question Answering (VQA) technique comprises using a series of prompts with questions that query various details about the environmental scenarios to obtain the details about the content of the provided image data (40) as an output of an image model (80),
wherein the provision (102) of scene description data (45) comprises:
- Acquiring responses to the questions regarding features of the provided image data from the output of the image model in the form of a pre-trained machine learning model, particularly a multimodal model,
- Refining the responses at least by concatenating the responses and/or reducing redundancy in the responses,
wherein the data set (60) is generated based on the refined responses.

2. The method (100) of claim 1, **characterized in that** the generated data set (60) is a training data set (60) that comprises multiple text-image pairs, wherein the text-image pairs comprise at least two of the following:
- The provided scene description data (45) with the generated scene descriptions,
- The provided image data (40) that corresponds to the generated scene descriptions,
- Synthetic image data generated based on the generated scene descriptions and/or the provided image data (40),
wherein the text-image pairs provide a representation of the different and/or newly generated environmental scenarios for the training, particularly fine-tuning, and/or testing, of the machine learning system (50).

3. The method (100) of any one of the preceding claims, **characterized in that** the method (100) further comprises:
- Carrying out the training, particularly a fine-tuning, of the machine learning system (50) by means of the generated data set (60) for an application for an at least partially autonomous driving system and/or a driver assistance system of a vehicle (90).

4. The method (100) of any one of the preceding claims, **characterized in that** the machine learning system (50) is trained and/or tested for providing a classification of digital images on the basis of pixels of the digital images, wherein the digital images particularly result from a recording of an environment of a vehicle (90) and/or a camera (95), preferably during a journey of the vehicle (90).

5. The method (100) of claim 3 or 4, **characterized in that** a controlling of the vehicle (90) is carried out automatically and based on an object detection and/or classification performed using the trained machine learning system (50).

6. The method (100) of any one of the preceding claims, **characterized in that** the image model is configured as a multimodal model and comprises an image encoder, wherein the machine learning system (50) is configured as a text-to-image model.

7. The method (100) of any one of the preceding claims, **characterized in that** the provision (102) of scene description data (45) comprises:
- Enhancing existing scene descriptions using the generated scene descriptions as new descriptions.

8. The method (100) of any one of the preceding claims, **characterized in that** the provision (103) of the data set (60) comprises:
- Generating text prompts (70) based on the provided scene description data (45), wherein information contained in the scene description data is used for the text prompts (70) to specify the text prompts (70) for an image generation,
- Generating the data set (60) based on the generated text prompts (70) and preferably also based on the provided image data.

9. The method (100) of any one of the preceding claims, **characterized in that** the training and/or testing is carried out for a technical downstream application, particularly a driving scene detection, wherein the questions are predefined to query details about the environmental scenarios related to corner cases of this downstream application, wherein the corner cases comprise at least one of the following: lost cargo on a road, burning cars, scene under foggy weather.

10. A machine learning model (51) resulting from training by the following steps:
- Generating a data set (60) by a method (100) of any one of the preceding claims,
- Training the machine learning model (51) at least with the generated data set (60).

11. A computer program (20), comprising instructions which, when the computer program (20) is executed by at least one computer (10), cause the computer (10) to carry out the method (100) of any one of claims 1 to 8.

12. A data processing apparatus (10), comprising means for carrying out the method (100) of any one of claims 1 to 8.

13. A computer-readable storage medium (15) comprising instructions which, when executed by a computer (10), cause the computer (10) to carry out the steps of the method (100) of any one of claims 1 to 8.
